Europäisches Patentamt

European Patent Office

Office européen des brevets

(19)

(11) **EP 1 272 563 B1**

(12) **FASCICULE DE BREVET EUROPEEN**

(45) Date de publication et mention
de la délivrance du brevet:
**01.12.2004 Bulletin 2004/49**

(21) Numéro de dépôt: **01947497.2**

(22) Date de dépôt: **03.04.2001**

(51) Int Cl.$^7$: **C08L 77/00**

(86) Numéro de dépôt international:
**PCT/FR2001/000991**

(87) Numéro de publication internationale:
**WO 2001/074947 (11.10.2001 Gazette 2001/41)**

(54) **COMPOSITIONS THERMOPLASTIQUES DE POLYAMIDE A PROPRIETES CHOC AMELIOREES**

THERMOPLASTISCHE POLYAMIDZUSAMMENSETZUNGEN MIT VERBESSERTER
SCHLAGFESTIGKEIT

POLYAMIDE THERMOPLASTIC COMPOSITIONS WITH IMPROVED IMPACT STRENGTH
PROPERTIES

(84) Etats contractants désignés:
**AT BE CH CY DE DK ES FI FR GB GR IE IT LI LU
MC NL PT SE TR**

(30) Priorité: **04.04.2000 FR 0004268**

(43) Date de publication de la demande:
**08.01.2003 Bulletin 2003/02**

(73) Titulaire: **Atofina
92800 Puteaux (FR)**

(72) Inventeurs:
• **MONTANARI, Thibaut
F-27300 Bernay (FR)**
• **BUSSI, Philippe
76000 Rouen (FR)**
• **BOUILLOUX, Alain
F-27300 Bernay (FR)**

(56) Documents cités:
**US-A- 4 945 129        US-A- 5 508 345**

EP 1 272 563 B1

**Description**

La présente invention concerne des compositions de polyamides thermoplastiques à propriétés choc améliorées et des compositions de modifiants choc.

Les polyamides thermoplastiques tels que le PA 6 ou le PA 6-6 possèdent d'excellentes propriétés de stabilité dimensionnelle, de résistance thermique ou de résistance chimique, qui sont utilisées dans les domaines électriques, électroniques ou automobiles. Cependant la résistance au choc n'est pas toujours suffisante en particulier à basse température.

L'amélioration des résistances aux chocs des polyamides est obtenue généralement par incorporation sous forme d'une phase dispersée d'un modifiant choc qui présente un caractère élastomérique et des fonctions réactives (acide acrylique, anhydride maléique) susceptibles de réagir avec des groupements fonctionnels de la matrice polyamide.

La présente invention fournit des polyamides thermoplastiques dans lesquels on a ajouté une composition de modifiants choc pour obtenir des propriétés choc améliorées, notamment la résilience à basse température. La présente invention concerne aussi cette composition de modifiants choc qu'on additionne aux polyamides pour en améliorer les propriétés choc.

US 5 070 145 décrit des compositions constituées de 80 parties de polyamide 6 ou polyamide 6-6 dans lesquelles on a dispersé 20 parties d'un mélange (i) d'un copolymère de l'éthylène et d'un acrylate d'éthyle ou de butyle et (ii) d'un copolymère de l'éthylène, de l'acrylate d'éthyle et de l'anhydride maléique. Ces compositions présentent une bonne résistance au choc.

EP 284 379 décrit des compositions multiphases de polyamide et de copolymère d'éthylène se présentant sous la forme d'une matrice de polyamide dans laquelle sont dispersés des nodules (1) d'un copolymère de l'éthylène, de l'acrylate d'éthyle et de l'anhydride maléique, dans ces nodules (1) sont dispersés des nodules de polyamides. On commence par préparer ces nodules (1) en dispersant du polyamide dans le copolymère d'éthylène puis on réticule, ensuite on disperse ces nodules dans du polyamide. Ces compositions sont aussi présentées comme ayant une bonne résistance au choc.

Le brevet FR 2 719 849 décrit des compositions thermoplastiques consistant en une matrice d'un polymère thermoplastique dans laquelle sont dispersés des nodules d'un deuxième polymère thermoplastique partiellement ou totalement encapsulé par un copolymère d'éthylène. On prépare ces compositions en effectuant d'abord l'encapsulation du deuxième polymère, ensuite on ajoute l'autre polymère formant la matrice dans des conditions telles qu'on ne détruit pas les capsules. Cette préparation est effectuée en deux étapes complètement séparées ou l'une à la suite de l'autre dans la même extrudeuse. Ces compositions présentent à la fois une bonne souplesse et une bonne résistance au choc. Les exemples montrent des matrices de polyamide 6, polyamide 12 ou de PBT (poly butylène téréphtalate) dans lesquelles sont dispersés des nodules de polyamide 6-6 encapsulé par un copolymère d'éthylène, d'acrylate d'éthyle et de méthacrylate de glycidyle.

EP 2 761 décrits des polyamides renforcés par des polyéthylènes ou des copolymères d'éthylène greffés par de l'acide (méth)acrylique, ses dérivés ou de l'anhydride maléique et éventuellement du polyéthylène.

EP 52 796 décrit des polyamides renforcés par (i) un copolymère alpha-oléfine/acide carboxylique insaturé, (ii) un copolymère alphaoléfine ester d'alkyle d'acide carboxylique insaturé et (iii) un composé métallique.

FR 2 292 016 décrit des polyamides renforcés par un mélange de copolymères d'alphaoléfines et d'esters d'acides carboxyliques insaturés ou leurs dérivés.

US 4 174 358 décrit des polyamides renforcés se présentant sous la forme d'une matrice de polyamide dans laquelle sont dispersés des nodules inférieurs à 1 $\mu$m ayant un certain module, devant être aussi une fraction du module du polyamide. De très nombreux renforçants sont décrits, quelques-uns ayant des fonctions époxyde. La plupart sont des polymères ayant des fonctions acides ou anhydrides neutralisées ou sont des mélanges à base d'EPDM.

EP 96 264 décrit des polyamides de viscosité comprise entre 2,5 et 5 renforcés par des copolymères éthylène/(méth)acrylate d'alkyle en $C_2$ à $C_8$/acide ou anhydride insaturé et comprenant 20 à 40 % en poids d'acrylate.

EP 564 338 décrit des polyamides renforcés (i) par des copolymères éthylène/(méth)acrylate d'alkyle/méthacrylate de glycidyle et (ii) éventuellement par des polyéthylènes, des copolymères éthylène/(méth)acrylate d'alkyle ou des copolymères éthylène/(méth)acrylate d'alkyle/anhydride d'acide dicarboxylique insaturé.

US 4 945 129 décrit des compositions à base de polyamide ayant des propriétés de résistance aux chocs à basse température comprenant 80% en poids de PA-6,6 (A1) 10% en poids de PA-4,6 diamine ou PA-6 diamine (A2) le rapport massique (A2)/(A1) étant inférieur à 1, et 10% en poids d'un copolymère réactif de type EPPAH (exemple 27) dont diffère l'objet de la présente invention en ce que la teneur en polyamide (A2) est plus faible, de 0,2 à 9 % en poids.

L'abondance de l'art antérieur montre que le problème de la tenue au choc des polyamides n'est pas simple. S'agissant du document de l'art antérieur EP 96 264, on arrive à des tenues au choc à température ambiante très bonnes mais insuffisantes à froid. En ajoutant dans ces compositions un autre copolymère avec des fonctions (meth)acrylate de glycidyle ainsi qu'il est décrit dans EP 564 338, on améliore le choc à froid. Cependant, il n'est pas toujours commode de doser la proportion des deux copolymères pour obtenir une réaction entre les fonctions anhydride de diacide carboxylique insaturé et méthacrylate de glycidyle.

On a maintenant trouvé qu'on pouvait améliorer de manière plus efficace la tenue au choc des polyamides (A1) non diamine en y ajoutant en quantité moindre un modifiant choc et un polyamide (A2) diamine, de préférence non miscible avec (A1) et ayant préférentiellement une température de fusion inférieure à celle du polyamide (A1). Par exemple si (A1) est le PA 6, (A2) est le PA 12.

L'invention a pour objet, une composition thermoplastique à base de polyamide, comprenant en poids :

- 50 à 98 parties d'un polyamide (A1) non diamine ;
- 0,2 à 9 parties d'un polyamide (A2) diamine, la chaîne dudit polyamide (A2) étant différente de celle du polyamide (A1), le polyamide (A2) diamine n'étant pas miscible avec le polyamide (A1) non diamine et le rapport massique (A2)/(A1) étant inférieur à 1 ;
- 1 à 30 parties, d'au moins un modifiant choc et réactif (B) ou d'un mélange (B') comprenant au moins un modifiant choc et au moins un modifiant réactif.

Selon un mode de réalisation de la composition, celle-ci est caractérisée en ce que le modifiant choc et réactif (B) ou le modifiant réactif du mélange (B') comprend au moins une macromolécule comprenant au moins deux fonctions réactives par macromolécule.

Selon un mode de réalisation de la composition, la température de fusion ou la température de transition vitreuse (Tg), s'il est amorphe, du polyamide (A2) diamine est inférieure à la température de fusion ou à la température de transition vitreuse (Tg), s'il est amorphe, du polyamide (A1) non diamine.

Selon un mode de réalisation de la composition, la différence entre les températures de fusion de (A1) et (A2) ou entre la température de fusion de l'un et la Tg de l'autre ou entre les Tg de (A1) et (A2), selon le cas d'espèce, est comprise entre 15 et 50°C, les températures de fusion et les Tg étant mesurées par DSC (Differential Scanning Calorimetry).

Selon un mode de réalisation de la composition, celle-ci est caractérisée en ce que la valeur de choc à +23°C et/ou à -40°C mesurée selon la norme CAE ISO 179 :93 de ladite composition comprenant x parties de (A1), y parties de (A2) et z parties de modifiant choc et réactif (B) ou de mélange de modifiants comprenant au moins un modifiant choc et réactif (B) ou de mélange (B') comprenant au moins un modifiant choc et au moins un modifiant réactif est supérieure d'au moins 25 %, préférentiellement d'au moins 50 %, à la valeur de choc respectivement à +23°C et/ou à -40°C d'une composition thermoplastique ne comprenant pas de polyamide (A2) diamine mais comprenant x parties du même composé polyamide (A1) non diamine et (z+y) parties du même composé modifiant choc et réactif (B) ou du même mélange de modifiants comprenant au moins un modifiant choc et réactif (B) ou du même mélange (B') comprenant au moins un modifiant choc et au moins un modifiant réactif.

Selon un mode de réalisation de la composition, celle-ci est caractérisée en ce que le MFI de ladite composition thermoplastique comprenant x parties de (A1 ), y parties de (A2) et z parties de modifiant choc et réactif (B) ou de mélange de modifiants comprenant au moins un modifiant choc et réactif (B) ou de mélange (B') comprenant au moins un modifiant choc et au moins un modifiant réactif est inférieur au MFI d'une composition thermoplastique ne comprenant pas de polyamide (A2) diamine mais comprenant x parties du même composé polyamide (A1) non diamine et (z+y) parties du même composé modifiant choc et réactif (B) ou du même mélange de modifiants comprenant au moins un modifiant choc et réactif (B) ou du même mélange (B') comprenant au moins un modifiant choc et au moins un modifiant réactif.

Selon un mode de réalisation de la composition, celle-ci est caractérisée en ce que le rapport massique (A2)/(B) est inférieur à 0,5.

Selon un mode de réalisation de la composition, celle-ci est caractérisée en ce que le rapport des concentrations des fonctions $NH_2$ du polyamide (A2) diamine et des fonctions réactives du modifiant choc et réactif (B) ou du modifiant réactif du mélange (B') est inférieur à 0,5.

Selon un mode de réalisation de la composition, le polyamide (A2) diamine est un PA 12 diamine ou un polyamide comprenant des motifs lauryllactame et/ou des motifs dodécaméthylènediamine et/ou des motifs acide dodécanedioïque.

Selon un mode de réalisation de la composition, le modifiant choc et/ou réactif (B) est souple et a un module de flexion de préférence inférieur à 200 MPa.

Selon un mode de réalisation de la composition, le modifiant choc et réactif (B) ou le modifiant réactif du mélange (B') est un copolymère (B1) à base d'éthylène et d'un anhydride d'acide carboxylique insaturé, copolymérisés.

Selon un mode de réalisation de la composition, le copolymère (B1) est choisi parmi les copolymères éthylène/ anhydride maléique et éthylène/ (méth)acrylate d'alkyle/anhydride maléique, ces copolymères comprenant de 0,2 à 10 % en poids d'anhydride maléique, de 0 à 40 % en poids de (méth)acrylate d'alkyle et ayant un MFI, indice de fluidité à l'état fondu, compris entre 0,5 et 200 g/10 min (mesuré à 190°C sous une charge de 2,16 kg).

Selon un mode de réalisation de la composition, le modifiant choc et réactif (B) ou le modifiant réactif du mélange (B') est un copolymère (B1) de l'éthylène et d'un anhydride d'acide carboxylique insaturé cogreffé.

Selon un mode de réalisation de la composition, le copolymère (B1) est l'EPR (éthylène-propylène rubber) cogreffé par l'anhydride maléique, ledit copolymère (B1) représentant préférentiellement entre 12 et 30 parties en poids de ladite composition thermoplastique.

Selon un mode de réalisation de la composition, celle-ci comprend entre 0,2 et 6 parties en poids de polyamide (A2) diamine.

Selon un mode de réalisation de la composition, le modifiant choc et réactif (B) ou le modifiant réactif du mélange (B') est un copolymère (B2) à base d'éthylène et d'un époxyde insaturé cogreffé ou copolymérisé.

Selon un mode de réalisation de la composition, (B2) est choisi parmi les copolymères éthylène/(méth)acrylate d'alkyle/époxyde insaturé et les copolymères éthylène/époxyde insaturé, ces copolymères comprenant de 0 à 40 parties en poids de (méth)acrylate d'alkyle et de 0,1 à 10 parties en poids d'époxyde insaturé.

Selon un mode de réalisation de la composition :

- (A1 ) est le PA 6 non diamine ou le PA 6-6 non diamine;
- (A2) est le PA 12 diamine ou le PA 11 diamine ;
- (B) est le copolymère (B1) décrit précédemment.

Selon un mode de réalisation de la composition :

- (A1 ) est le PA 11 non diamine;
- (A2) est le PA 12 diamine ;
- (B) est le copolymère (B1) décrit précédemment.

Selon un mode de réalisation de la composition :

- (A1) est le PA 12 non diamine;
- (A2) est le PA 11 diamine ;
- (B) est le copolymère (B1) décrit précédemment.

L'invention a également pour objet un modifiant choc comprenant, en poids:

- 0,2 à 5 parties, de préférence 1 à 3 parties d'un polyamide (A2) diamine ;
- 5 à 40 parties, de préférence 10 à 30 parties d'un modifiant choc et réactif (B) ou d'un mélange de modifiants comprenant au moins un modifiant choc et réactif (B) ou d'un mélange (B') comprenant au moins un modifiant choc et au moins un modifiant réactif;
- 0 à 20 parties d'un plastifiant.

L'invention a également pour objet un procédé de préparation d'une composition thermoplastique à base de polyamide caractérisé en ce qu'il comprend une étape de mélange d'un polyamide (A1) non diamine avec une composition de modifiant choc tel que décrit précédemment.

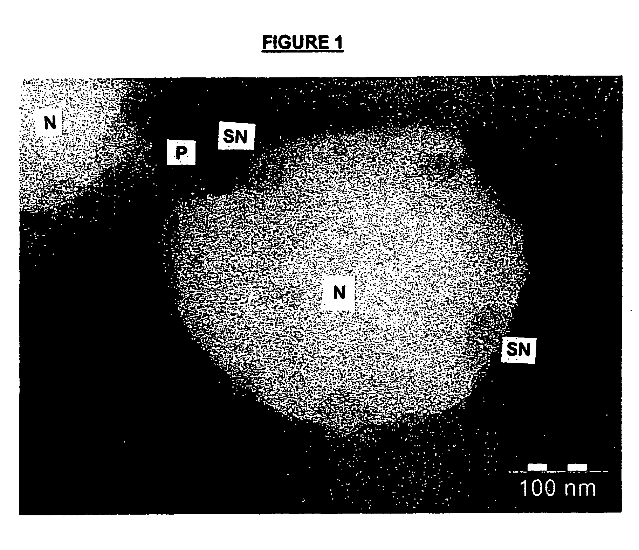

La **figure 1** est une photographie, prise au microscope électronique à transmission, d'un nodule (N) d'une composition de PA6 (78 %), de Lotader® 4700 (20 %) et de PA12diNH$_2$ (2 %), le PA12diNH$_2$ apparaissant sous forme de sous-nodule (SN) sur le nodule principal (N). Les sous-nodules (SN) peuvent former un pont (P) entre nodules principaux.

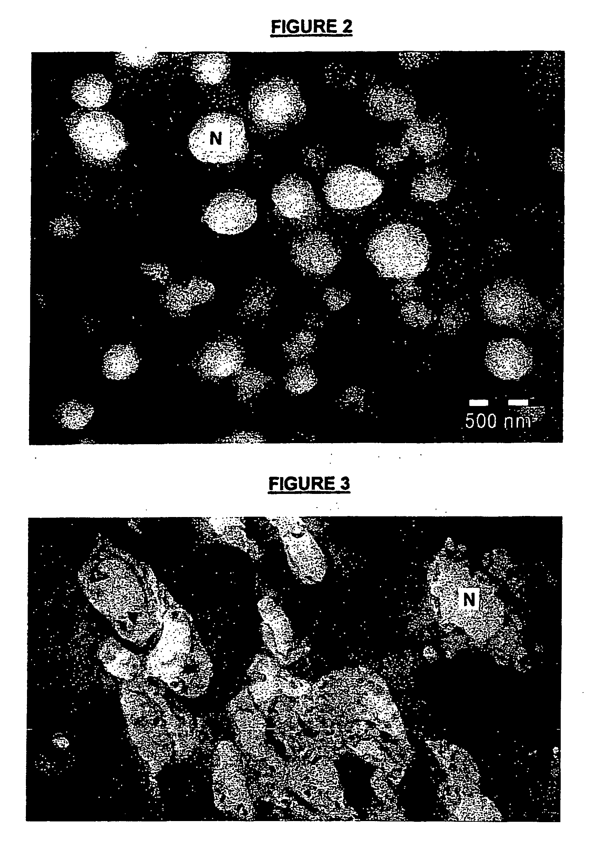

La **figure 2** est une photographie, prise au microscope électronique à transmission, de nodules dans une composition de PA6 (78 %), de Lotader® 4700 (20 %) et de PA12diNH$_2$ (2 %).

La **figure 3** est une photographie, prise au microscope électronique à transmission, de nodules dans une composition de PA6 (70 %), de Lotader® 4700 (20 %) et de PA12diNH$_2$ (10 %). On constate que les nodules de la **figure 3** ont perdu leur forme sphérique par rapport à la **figure 2** et ont réticulés entre eux.

Les compositions de l'invention sont fabriquées par mélange à l'état fondu des différents constituants (extrudeuses bivis, BUSS, monovis) selon les techniques habituelles des thermoplastiques. Les compositions peuvent être granulées en vue d'une utilisation ultérieure (il suffit de les refondre) ou bien de suite injectées dans un moule ou un dispositif d'extrusion ou de coextrusion pour fabriquer des objets tels que des tubes ou des profilés.

[Description détaillée de l'invention]

S'agissant du polyamide (A1), on entend par polyamide les produits de condensation :

- d'un ou plusieurs aminoacides, tels les acides aminocaproïques, amino-7-heptanoïque, amino-11-undécanoïque et amino-12-dodécanoïque ;
- d'un ou plusieurs lactames tels que caprolactame, oenantholactame et lauryllactame ;
- d'un ou plusieurs sels ou mélanges de diamines telles que la tétraméthylènediamine, l'hexaméthylènediamine, la dodécaméthylènediamine, la métaxylylènediamine, le bis-p aminocyclohexylméthane et la triméthylhexaméthylène diamine, avec des diacides tels que les acides isophtalique (I), téréphtalique (T), adipique, azélaïque, subérique, sébacique et dodécanedicarboxylique.

A titre d'exemple de polyamide, on peut citer le PA 6 et le PA 6-6 et les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique. A titre d'exemple d'acide alpha oméga aminocarboxylique, on peut citer l'acide amino-undécanoïque et l'acide aminododécanoïque.

A titre d'exemples de copolyamides, on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

A titre d'exemple de lactames, on peut citer ceux ayant de 3 à 12 atomes de carbone sur le cycle principal et pouvant être substitués. On peut citer par exemple le $\beta,\beta$-diméthylpropriolactame, le $\alpha,\alpha$-diméthylpropriolactame, l'amylolactame, le caprolactame, le capryllactame et le lauryllactame.

A titre d'exemple de diamine, on peut citer les diamines aliphatiques ayant de 6 à 12 atomes, aryliques et/ou cycliques saturées. A titre d'exemples, on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

A titre d'exemple d'acide dicarboxylique, on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés (ces acides gras dimérisés ont une teneur en dimère d'au moins 98 % et sont de préférence hydrogénés) et l'acide dodécanedioïque $HOOC-(CH_2)_{10}-COOH$.

On peut aussi utiliser tout polyamide amorphe, donc sans point de fusion.

Le MFI des polyamides de la présente invention est mesuré selon les règles de l'art à une température indiquée au-dessus de la température de fusion du polyamide. S'agissant du PA 6, le MFI est mesuré à 235°C sous 2,16 kg. S'agissant du PA 6-6, le MFI est mesuré à 275 ° C sous 2,16 kg.

On peut utiliser des mélanges de polyamides. Avantageusement, le MFI des polyamides est compris entre 0,3 et 100 g/10 min, de préférence entre 1 et 50 g/10 min.

On ne sortirait pas du cadre de l'invention en remplaçant une partie du polyamide (A1 ) par un copolymère à blocs polyamide et blocs polyéther, c'est à dire en utilisant un mélange comprenant au moins un des polyamides précédents et au moins un copolymère à blocs polyamide et blocs polyéther.

Les copolymères à blocs polyamides et blocs polyéthers résultent de la copolycondensation de séquences polyamides à extrémités réactives telles que :

- les séquences polyamides à bouts de chaîne diamines avec des séquences polyoxyalkylènes à bouts de chaînes dicarboxyliques ;
- les séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols ;
- les séquences polyamides à bouts de chaînes dicarboxyliques avec des polyétherdiols, les produits obtenus étant, dans ce cas particulier, des polyétheresteramides. On utilise avantageusement ces copolymères, les séquences polyamides à bouts de chaînes dicarboxyliques provenant, par exemple, de la condensation d'acides alpha-oméga aminocarboxyliques, de lactames ou de diacides carboxyliques et diamines en présence d'un diacide carboxylique limiteur de chaîne.

avec des séquences polyéthers à extrémités réactives, telles que le polyéther qui peut être par exemple un polyéthylèneglycol (PEG), un polypropylèneglycol (PPG) ou un polytétraméthylèneglycol (PTMG) également appelé polytétrahydrofurane (PTHF).

La masse molaire en nombre $\overline{M}_n$ des séquences polyamides est comprise entre 300 et 15 000 et de préférence entre 600 et 5 000.

La masse $\overline{M}_n$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides. Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, ont des duretés shore D pouvant être comprises entre 20 et 75 et avantageusement entre 30 et 70 et une viscosité inhérente entre 0,8 et 2,5 mesurée dans le métacrésol à 250°C pour une concentration initiale de 0,8 g/100 ml. Les MFI peuvent être compris entre 5 et 50 (à 235°C sous une charge de 1 kg)

Les blocs polyétherdiols sont soit utilisés tels quels et copolycondensés avec des blocs polyamides à extrémités carboxyliques, soit aminés pour être transformés en polyéthers diamines et condensés avec des blocs polyamides à extrémités carboxyliques. Ils peuvent être aussi être mélangés avec des précurseurs de polyamide et un limiteur de chaîne pour faire des polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyéther sur la quantité de polyamide est compris avantageusement entre 10/90 et 60/40, en poids. On peut citer par exemple les mélanges de (i) PA 6 et (ii) copolymère à blocs PA 6 et blocs PTMG et des mélanges de (i) PA 6 et (ii) copolymère à blocs PA 12 et blocs PTMG.

Les polyamides selon leur procédé de fabrication et /ou le limiteur de chaîne utilisé peuvent avoir des excès de terminaisons acides, amines ou même avoir une part de terminaisons alkyles ou autres, par exemple, aryle ou tout autre fonction, découlant de la structure du limiteur choisi. L'excès de terminaisons acides provient d'un limiteur de chaîne diacide et l'excès de terminaisons amines provient d'un limiteur de chaîne diamine. Un limiteur de chaîne amine primaire conduit à une chaîne polyamide ayant une extrémité alkyle et une extrémité amine.

Nous appelons polyamide diamine ou PAdiNH$_2$ un polyamide qui répond aux critères suivants :

- un PAdiNH$_2$ possède une certaine quantité de chaînes terminées de part et d'autre par un groupement amine (NH$_2$), supérieure à celle des chaînes diacide s'il y en a ;
- la concentration en groupes amine d'un PAdiNH$_2$ est globalement supérieure à la concentration en groupes acide ;
- un PAdiNH$_2$ est obtenu en ajoutant une diamine comme limiteur de chaîne ou, dans le cas des polyamides à base de diamine et de diacide tel que par exemple le PA 6-6, en ajoutant plus de comonomère diamine que de comonomère diacide.

Réciproquement, un polyamide est appelé polyamide diacide ou PAdiCOOH pour les raisons contraires.

Un polyamide est dit équilibré si :

- on n'a pas rajouté de limiteur de chaîne ou d'excès d'un des comonomères ;
- la concentration en groupes amine et en groupes acide est essentiellement équivalente.

Un polyamide est dit monoamine si le limiteur de chaîne choisi est un monoamine, conduisant à la création d'extrémités de chaîne alkyl ou aryle non réactives.

Un polyamide est dit monoacide si le limiteur choisi est un monoacide, conduisant à la création d'extrémités de chaîne alkyl ou aryle, non réactives.

Nous qualifierons de neutres les polyamides équilibrés, monoacides ou monoamines définis ci-dessus.

Pour déterminer la nature des extrémités d'un polyamide et le pourcentage de chaînes ayant ces terminaisons, on peut utiliser les méthodes connues de détermination des masses molaires telles que par exemple la SEC (Steric Exclusion chromatography) et les méthodes de dosage des fonctions amines et acides.

Dans la présente demande, le terme SEC désigne la mesure des masses moléculaires de polymères par chromatographie d'exclusion stérique. Cette technique et plus particulièrement son application aux polyamides et aux polyamides blocs polyéthers sont décrites dans "Journal of Liquid Chromatography, 11(16), 3305-3319 (1988)".

Pour la détermination des terminaisons, par exemple pour le PA 6, on dissout l'échantillon dans une solution de phénol dans le méthanol et on titre les amines à l'aide d'une solution d'acide paratoluènesulphonique dans le méthanol. Pour les extrémités acides, toujours pour le PA 6, on dissout l'échantillon dans l'alcool benzylique et on titre les fonctions acides à l'aide d'une solution de potasse dans l'alcool benzylique.

On ne sortirait pas du cadre de l'invention si (A1) est un mélange de polyamides. (A1 ) peut être aussi un mélange de polyamides miscibles par suite de réactions de transamidification telles que par exemple la réaction entre un polyamide aliphatique et un polyamide semiaromatique.

Avantageusement (A1) n'est pas un $PAdiNH_2$ et est de préférence un polyamide dit neutre (défini plus haut) avantageusement le PA 6.

S'agissant du polyamide (A2), il peut être choisi parmi les polyamides cités pour (A1), mais il est diamine et avantageusement à caractère $diNH_2$ fortement marqué. Le polyamide (A2) est différent du polyamide (A1), c'est à dire qu'ils ne dérivent pas des mêmes monomères. (A1) est par exemple un PA 6 et (A2) un PA 12 $diNH_2$ et donc la différence entre les PA , au sens où on l'entend ici, ne concerne pas le type de terminaisons, mais bien la nature de la chaîne polyamide. (A1 ) et (A2) sont préférés non miscibles. On ne sortirait pas du cadre de l'invention si (A1) et (A2) subissaient des réactions de transamidifications entre eux et donc tendaient à devenir miscibles par la suite. Ces réactions de transamidifications se produisent généralement au-delà de 300°C.

A titre d'exemple de telles réactions on peut citer la réaction d'un polyamide aliphatique avec un polyamide semi-aromatique. Par exemple (A1) est le PA 12 et (A2) est choisi parmi le BMACM-12, le 12/BMACM-I, le PACM-12 et le 12/BMACM-I/BMACM-T.

Selon une première forme préférée de l'invention, (A2) n'est pas miscible avec (A1). (A2) est réputé non miscible avec (A1 ) si leur mélange conduit a une dispersion discrète de l'un dans l'autre, typique de l'existence de nodules (de préférence de diamètre > 0.01 μm) de l'un dans l'autre. A titre d'exemple, on peut citer le PA 6 et le PA 12, le PA 6 et le coPA 6/6-6, le PA 6 et le coPA 6/ 12, le PA 6 et le coPA 6/6-6/12, le PA 6 et le coPA 6-6/6-10/12.

Selon une deuxième forme préférée de l'invention, la température de fusion ou la température de transition vitreuse (Tg), s'il est amorphe, du polyamide (A2) est inférieure à la température de fusion ou à la température de transition vitreuse (Tg), s'il est amorphe, du polyamide (A1 ).

Avantageusement une différence de 5 à 80°C entre les températures de fusion, ou entre la température de fusion et la Tg ou encore entre les Tg selon le cas d'espèce, est suffisante. De préférence, cette différence est de 15 à 50°C. La température de fusion ainsi que la Tg est mesurée de préférence par DSC (Differential Scanning Calorimetry).

Il est avantageux d'utiliser des copolyamides pour obtenir une température de fusion plus basse que celle de (A1).

Avantageusement, (A2) est un PA 12 ou un polyamide comprenant des motifs lauryllactame et/ou des motifs dodecaméthylènediamine et/ou des motifs acide dodecanedioïque, pourvu bien sûr que les autres conditions soient respectées. On ne sortirait pas du cadre de l'invention si (A2) était un mélange de polyamides.

S'agissant du plastifiant, à titre d'exemple, on peut citer le butylbenzène sulfonamide (BBSA), l'éthylhexylpara-hydroxy benzoate (EHPB) et le décylhexylparahydroxy benzoate (DHPB). On ne sortirait pas du cadre de l'invention en utilisant un mélange de plusieurs plastifiants.

On appelle modifiant choc réactif tout polymère souple capable de réagir avec le polyamide (A2) diamine. On peut citer en tant que modifiant choc réactif, les polyoléfines fonctionnalisées, les polyesters aliphatiques greffés, les polymères à blocs polyéther et blocs polyamide greffés, les copolymères de type coeur-écorce fonctionnalisés.

Une polyoléfine fonctionnalisée est un polymère comprenant des motifs alpha oléfine et des motifs époxyde ou acide carboxylique ou anhydride d'acide carboxylique.

On entend par polyoléfine un polymère comprenant des motifs oléfines tels que par exemple des motifs éthylène, propylène, butène-1, ou tout autre alpha oléfine. A titre d'exemple, on peut citer :

- les polyéthylènes tels que les LDPE, LLDPE ou VLDPE, les copolymères éthylène/propylène, ou encore les PE métallocènes. ;
- les copolymères de l'éthylène avec au moins un produit choisi parmi les sels ou les esters d'acides carboxyliques insaturés, ou les esters vinyliques d'acides carboxyliques saturés.

On peut encore citer les polymères blocs SBS, SIS, SEBS greffés par des époxydes insaturés tels que le (méth)acrylate de glycidyle, ou par des acides carboxyliques tels que l'acide (méth)acrylique ou encore par des anhydrides d'acides carboxyliques insaturés tels que l'anhydride maléique.

A titre de polyesters aliphatiques greffés, on peut citer la polycaprolactone greffée par de l'anhydride maléique, du méthacrylate de glycidyle, des esters vinyliques ou du styrène. Ces produits sont décrits dans la demande EP 711 791 dont le contenu est incorporé dans la présente demande.

Les copolymères de type coeur-écorce désignent de fines particules ayant un coeur en élastomère et au moins une écorce thermoplastique. La taille des particules est en général inférieure au µm et avantageusement comprise entre 200 et 500 nm.

A titre d'exemple de coeur, on peut citer les homopolymères de l'isoprène ou du butadiène, les copolymères de l'isoprène avec au plus 30 % en moles d'un monomère vinylique et les copolymères du butadiène avec au plus 30 % en moles d'un monomère vinylique. Le monomère vinylique peut être le styrène, un alkylstyrène, l'acrylonitrile ou un (méth)acrylate d'alkyle. Une autre famille de coeur est constituée par les homopolymères d'un (méth)acrylate d'alkyle et les copolymères d'un (méth)acrylate d'alkyle avec au plus 30 % en moles d'un monomère vinylique. Le (méth) acrylate d'alkyle est avantageusement l'acrylate de butyle. Le monomère vinylique peut être le styrène, un alkylstyrène, l'acrylonitrile, le butadiène ou l'isoprène. Le coeur peut être réticulé en tout ou partie. Il suffit d'ajouter des monomères au moins difonctionnels au cours de la préparation du coeur. L'écorce ou les écorces sont des homopolymères du styrène, d'un alkylstyrène ou du méthacrylate de méthyle ou des copolymères comprenant au moins 70 % en moles de l'un de ces monomères précédents et au moins un comonomère choisi parmi les autres monomères précédents, l'acétate de vinyle et l'acrylonitrile.

L'écorce est fonctionnalisée en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple de monomères fonctionnels : l'anhydride maleique, l'acide (méth)acrylique et le méthacrylate de glycidyle.

Avantageusement le modifiant réactif est souple et son module de flexion est de préférence inférieur à 200 MPa.

On ne sortirait pas du cadre de l'invention en utilisant comme modifiant choc réactif, selon l'invention, un mélange de plusieurs modifiants réactifs ou un mélange d'au moins un modifiant réactif et d'au moins un modifiant non réactif, pourvu que l'un au moins de ces modifiants réactifs ou non réactifs soit également un modifiant choc dans ce mélange.

Selon une première forme particulière de l'invention, le modifiant réactif est choisi parmi les copolymères (B1) de l'éthylène et d'un anhydride d'acide carboxylique insaturé. Les copolymères (B1) peuvent être obtenus :

(i) par greffage de l' anhydride d'acide carboxylique insaturé sur le polyéthylène homo ou copolymère, on parle alors de copolymères (B1) greffés ; ou

(ii) par copolymérisation, par exemple radicalaire, de l'éthylène et d'un anhydride d'acide carboxylique insaturé, on parle alors de copolymères (B1) non greffés.

S'agissant des copolymères (B1) greffés, l'anhydride d'acide carboxylique insaturé peut être choisi par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1) hept-5-ène-2,2-dicarboxylique. On utilise avantageusement l'anhydride maléique. On ne sortirait pas du cadre de l'invention en remplaçant tout ou partie de l'anhydride par un acide carboxylique insaturé tel que par exemple l'acide (méth)acrylique. Le greffage est une opération connue en soi.

A titre d'exemple de polyéthylènes, on peut citer :

- le polyéthylène basse densité (LDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.
- les élastomères EPR (éthylène - propylène - rubber)
- les élastomères EPDM (éthylène - propylène - diène)
- les mélanges de polyéthylène avec un EPR ou un EPDM
- les copolymères éthylène/(méth)acrylate d'alkyle pouvant contenir jusqu'à 60 % en poids de (méth)acrylate et de préférence entre 2 et 40 %.

A titre de comonomères, on peut citer :

- les alpha-oléfines, avantageusement celles ayant de 3 à 30 atomes de carbone. A titre d'exemples d'alpha oléfines, on peut citer le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène, et le 1-triacontène, ces alpha-oléfines pouvant être utilisées seules ou en mélange de deux ou de plus de deux ;
- les esters d'acides carboxyliques insaturés, tels que par exemple les (méth)acrylates d'alkyle, les alkyles pouvant avoir jusqu'à 24 atomes de carbone : des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle ;
- les esters vinyliques d'acides carboxyliques saturés tels que par exemple l'acétate ou le propionate de vinyle ;
- les diènes tels que par exemple le 1,4-hexadiène.

Le polyéthylène peut comprendre plusieurs des comonomères précédents.

Avantageusement, le polyéthylène, qui peut être un mélange de plusieurs polymères, comprend au moins 50 % et de préférence 75 % (en moles) d'éthylène, sa densité peut être comprise entre 0,86 et 0,98 g/cm$^3$. Le MFI ou indice de fluidité à l'état fondu (à 190°C sous 2,16 kg) est compris avantageusement entre 0,1 et 1000 g/10 min.

S'agissant des copolymères (B1) non greffés, on peut citer les copolymères de l'éthylène, d'anhydride d'acide carboxylique insaturé et éventuellement d'un autre monomère pouvant être choisi parmi les comonomères cités plus haut pour les copolymères (B1) greffés.

On utilise avantageusement les copolymères éthylène/anhydride maléique et les copolymères éthylène/(méth)acrylate d'alkyle/anhydride maléique. Ces copolymères comprennent de 0,2 à 10 % en poids d'anhydride maléique et de 0 à 40 %, de préférence de 5 à 40 % en poids de (méth)acrylate d'alkyle. Leur MFI est compris entre 0,5 et 200 (à 190°C sous 2,16 kg). Les (méth)acrylates d'alkyle ont déjà été décrits plus haut. On peut utiliser un mélange de plusieurs copolymères (B1) non greffés. On peut aussi utiliser un mélange d'un copolymère éthylène/anhydride maléique et d'un copolymère éthylène/(méth)acrylate d'alkyle/anhydride maléique. On ne sortirait pas du cadre de l'invention si l'anhydride était hydrolysé en tout ou partie ou en remplaçant l'anhydride par un acide carboxylique insaturé. Ces fonctions acides ou celles provenant de l'hydrolyse de l'anhydride peuvent être neutralisées par un métal tel que le zinc ou un alcalin tel que le lithium.

Le copolymère (B1) non greffé est disponible dans le commerce il est produit par polymérisation radicalaire à une pression pouvant être comprise entre 200 et 2500 bars, il est vendu sous forme de granulés.

Selon une deuxième forme particulière de l'invention, le modifiant réactif est choisi parmi les copolymères (B2) de l'éthylène et d'un époxyde insaturé. Les copolymères (B2) peuvent être obtenus :

(iii) par greffage de l'époxyde insaturé sur le polyéthylène homo ou copolymère, on parle alors de copolymères (B2) greffés ; ou

(iv) par copolymérisation, par exemple radicalaire, de l'éthylène et de l'époxyde insaturé, on parle alors de copolymères (B2) non greffés.

Le greffage peut être effectué en phase solvant ou sur le polyéthylène en fusion en présence d'un peroxyde. Ces techniques de greffage sont connues en elles-mêmes. Quant à la copolymérisation de l'éthylène et d'un époxyde insaturé, on peut utiliser les procédés dits de polymérisation radicalaire fonctionnant habituellement à des pressions entre 200 et 2 500 bars.

A titre d'exemple d'époxydes insaturés, on peut citer :

- les esters et éthers de glycidyle aliphatiques tels que l'allyl glycidyléther, le vinyle glycidyléther, le maléate et l'itaconate de glycidyle, le (méth)acrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, le 5-norbornène-2-méthyl-2-glycidyl carboxylate et l'endo cis-bicyclo(2,2,1)-5-heptène-2,3-diglycidyl dicarboxylate.

S'agissant du greffage, le copolymère s'obtient à partir du greffage d'un polyéthylène homo ou copolymère comme décrit pour (B1) sur lequel on greffe un époxyde au lieu d'un anhydride. La copolymérisation est semblable à celle décrite pour (B1) sauf que l'on utilise un époxyde. Il peut aussi y avoir d'autres comonomères comme dans le cas de (B1).

Le produit (B2) est avantageusement un copolymère éthylène/ (méth)acrylate d'alkyle/époxyde insaturé ou un copolymère éthylène/époxyde insaturé. Avantageusement, il peut contenir de 0 à 40 % en poids de (méth)acrylate d'alkyle, de préférence de 5 à 40 % et de 0,1 à 10 % en poids d'époxyde insaturé, de préférence 0,1 à 8 %.

L'époxyde est avantageusement le (méth)acrylate de glycidyle.

Avantageusement, le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est avantageusement de 20 à 35 %. Le MFI est avantageusement compris entre 0,5 et 200 g/10 min (à 190°C sous 2,16 kg). On peut utiliser un mélange de plusieurs copolymères (B2) ou un mélange d'un copolymère éthylène/(méth)acrylate d'alkyle/époxyde insaturé et d'un copolymère éthylène/époxyde insaturé. Ce copolymère (B2) peut être obtenu par polymérisation radicalaire des monomères.

Selon d'autres formes particulières de l'invention, on peut utiliser en plus du modifiant réactif précédent un modifiant non réactif. A titre d'exemple, on peut citer les mêmes polymères que le modifiant réactif mais ne portant pas de fonctions. A titre d'exemple, on peut citer les polyoléfines, les polyoctenamères (par exemple le Vestenamer® vendu par Degussa Hüls) et les coeur écorce non fonctionnalisés. Avantageusement, la polyoléfine est choisie parmi le LLDPE, le VLDPE, les copolymères éthylène/acétate de vinyle ou les copolymères éthylène/(méth)acrylate d'alkyle. La densité peut être avantageusement la plus basse possible, le Melt Flow Index (MFI) à 190°C et 2.16 kg peut être avantageusement compris entre 0,3 et 40.

Des compositions avantageuses sont telles que :

- (A1) est le PA 6 ou le PA 6-6 ;
- (A2) est le PA 12 diamine ou le PA 11 diamine ;

le modifiant réactif étant le copolymère (B1).

L'invention est particulièrement utile pour les PA 6 de MFI (à 235°C sous 2,16kg) de 5 à 30 g/10 min. Pour les PA 6, plus visqueux, par exemple ceux ayant des MFI inférieur à 5 g / 10 min, l'amélioration concerne essentiellement le choc à température ambiante.

On peut encore citer les compositions :

- (A1 ) est le PA 11 ;
- (A2) est le PA 12 diamine ;

le modifiant réactif étant le copolymère (B1).

On peut encore citer :

- (A1) est le PA 12 ;
- (A2) est le PA 11 diamine ; le modifiant réactif étant le copolymère (B1).

Des compositions avantageuses comprennent en poids:

- 70 à 90 parties , de préférence 75 à 85 parties de polyamide (A1) ;
- 0,2 à 5 parties , de préférence 1 à 3 parties de polyamide (A2) ;
- 5 à 40 parties , de préférence 10 à 30 parties de modifiant réactif ;
- 0 à 20 parties de plastifiant.

Des compositions avantageuses comprennent aussi la combinaison des formes avantageuses qu'on vient de décrire.

L'invention concerne aussi des compositions de modifiant choc comprenant en poids:

- 0,2 à 5 parties , de préférence 1 à 3 parties de polyamide (A2) diamine ;
- 5 à 40 parties , de préférence 10 à 30 parties de modifiant réactif ;
- 0 à 20 parties de plastifiant.

Les compositions selon l'invention, les polyamides modifiés ou les compositions de modifiant choc, peuvent renfermer, en outre, au moins un additif choisi parmi

- les colorants ;
- les pigments;
- les azurants ;
- les plastifiants ;

et en particulier les additifs usuels des PA, à savoir les stabilisants, lubrifiants, charges, ignifugeants et notamment les charges de renfort telles que les fibres de verre, les fibres de carbone, les fibres minérales de type wollastonite.

[Exemples]

On a utilisé les produits suivants dans des exemples des tableaux qui suivent:

**Lotader® 4700** : copolymère éthylènelacrylate d'éthyle/anhydride maléique de proportions en poids 68,5/30/1,5 , de MFI compris entre 3 et 10 g/10 min (à 190°C sous 2,16 kg) , statistique , obtenu par catalyse radicalaire haute pression. Il a en moyenne 2 à 3 fonctions anhydride par macromolécule.

**Lotader® 4720** : copolymère éthylène/acrylate d'éthyle/anhydride maléique de proportions en poids 69,7/30/0,3, de MFI compris entre 3 et 10 g/10 min ( à 190°C sous 2,16 kg), statistique, obtenu par catalyse radicalaire haute pression. Il a en moyenne 0,4 à 1,2 fonctions anhydride par macromolécule.

**Lotader® 3410** : copolymère éthylène/acrylate de butyle/anhydride maléique de proportions en poids 78/18/3, de MFI compris entre 3 et 10 g/10 min (à 190°C sous 2,16 kg), statistique, obtenu par catalyse radicalaire haute pression. Il a en moyenne 3 à plus de 3 fonctions anhydride par macromolécule.

**Exxelor VA1801®** : EPRm, copolymère éthylène/propylène greffé anhydride maléique, commercialisé par Exxon.

**PA 12 diNH2** : PA 12 diamine de température de fusion égale à 178°C et de MFI compris entre 20 et 40 g/10min (à 235°C sous 5 kg).

**PA 6 diNH2** : PA 6 diamine de température de fusion égale à 220°C et de MFI compris entre 30 et 50 g/10 min (à 235°c sous 2,16 kg)

**PA6 Akulon C225®** : PA 6 de MFI compris entre 17 et 23 g / 10 min (à 235°C sous 2,16 kg), commercialisé par DSM.

**PA 6 Ultramid® B3** : PA 6 de MFI compris entre 17 et 23 g / 10 min (à 235°C sous 2,16 kg)

**PA6 Domamid 27®** : PA 6 de MFI compris entre 17 et 23 g / 10 min (à 235°C sous 2,16 kg), commercialisé par Domo.

**PA 12 diCOOH** : PA 12 diacide de MFI compris entre 20 et 40 g / 10 min (à 235°C sous 5 kg)

**coPA 6/6-6/12 diNH2** : copolyamide diamine de composition massique en % respectivement 55/20/25, de température de fusion comprise entre 140 et 160°C et de MFI compris entre 25 et 35 g/10 min(à 235°C sous 2,16 kg)

**coPA IPD.10/12 diNH2** : copolyamide diamine de PA10/PA12 de composition massique 80/20, de température de transition vitreuse Tg=100-120°C et de MFI compris entre 10 et 30 g/10 min (à 235°C sous 5 kg)

**Lotryi 30BA02®** : copoylère éthylène/acrylate de butyle de proportions en poids 70/30, de MFI compris entre 1 et 4 (à 190°C sous 2,16 kg), statistique, obtenu par catalyse radicalaire haute pression.

**Engage 8842®** : copolymère éthylène/octène, commercialisé par Dupont Dow Elastomer.

**Surlvn 9020®** : copolymère éthylène/acide méthacrylique salifié par $Zn^{2+}$, commercialisé par Dupont.

Les compositions ont été réalisées sur une extrudeuse bivis co-rotative et sur co-malaxeur Buss. Les différents ingrédients ont été introduits selon les règles de l'art. Les compositions ont été récupérées sous forme de granulés. On a ensuite injecté des barreaux qu'on a conditionnés 15 jours à 50 % d'humidité relative puis les mesures de choc ont été faites selon la norme CAE ISO 179:93 à - 40°C et + 23°C. Les résultats sont reportés dans le **TABLEAU 1** ci-dessous. Les comp A, B et D constituent les comparatifs. L' exemple C est une composition selon l'invention. On a mesuré la résistance au choc à +23°C et à -40°C ainsi que le MFI (melt flow index ou indice de fluidité à l'état fondu) à 235°C, sous une charge de 2,16 kg pour ces compositions.

## TABLEAU 1

|  | Comp A | Comp B | C | CompD |
|---|---|---|---|---|
| PA 6 Ultramid ® B3 | 100 | 80 | 78 | 70 |
| Lotader ® 4700 |  | 20 | 20 | 20 |
| PA 12 diNH$_2$ |  |  | 2 | 10 |
| choc à +23°C | 8 | 23 | 84 | 118 |
| choc à -40°C | 2,8 | 7,8 | 19 | 17 |
| MFI (235°C ; 2,16 kg) en g/10min |  | 3,8 | 4,0 | 1,6 |

Les exemples 22 à 27 dans le TABLEAU 2 montrent l'efficacité en matière de choc à basse température d'une composition selon l'invention comprenant : PA non diamine/PA diNH$_2$/modifiant choc et réactif, par rapport au comparatif 21 et ce avec des proportions faibles de PA diNH$_2$, quelque soit le procédé (pré-mélangé ou non pré-mélangé). On constate également que ces compositions selon l'invention ont un MFI élevé donc sont fluides, permettant leur mise en oeuvre aisée avec une bonne productivité.

## TABLEAU 2

|  | Comp 21 | Ex 22 | Ex 23 | Ex 24 | Ex 25 | Ex 26 | Ex 27 |
|---|---|---|---|---|---|---|---|
| PA6 Domamid® 27 | 80 | 78 | 80 | 80 | 80 | 80 | 80 |
| Lotader® 4700 | 20 | 20 | 18 | 18 | 18# | 19 | 16 |
| PA12diNH$_2$ |  |  |  |  | 2 | 2# |  |  |
| PA12diNH$_2$ (autre lot) |  | 2 | 2 |  |  | 1 | 4 |
| MFI 235°C ; 2,16kg en g/10 min | 5.9 |  | 7.7 |  |  | 8.2 | 6.2 |
| Choc à +23°C | 40 | 95 | 88 | 94 | 73 | 77 | 90 |
| Choc à -40°C | 12.9 | 17.5 | 17.7 | 21.3 | 17.7 | 17.3 | 18.3 |

# le Lotader®4700 et le PA 12 diNH$_2$ ont été pré-mélangés pré-extrudés, c'est à dire pré-mélangés en fondu, puis introduits dans le PA 6.

Les comparatifs 31, 34 et 35 ainsi que l'exemple 32 du TABLEAU 3 permettent de mettre en évidence :

- l'importance d'avoir un PA(A2)diNH2 par rapport à un PA(A2)diCOOH (voir exemple 32 et comp 35) sur la résistance au choc à basses températures ;
- l'importance d'avoir du PAdiNH2 dans une composition: PA non diamine/modifiant choc réactif (voir exemple 32 et comp 31), sur la résistance au choc à basses températures,
- l'importance d'avoir un PA(A2) différent du PA(A1) (voir exemple 32 et comp 34) sur la résistance au choc à basses températures. PA(A2) peut contenir des motif « 6 » identique aux motifs « 6 » de PA(A1), pourvu qu'il soit constitué substantiellement d'autres motifs « 6.6 » ou « 12 » et qu'il ne soit pas miscible dans le PA majoritaire matriciel.

## TABLEAU 3

|  | Comp 31 | Ex 32 | Comp 34 | Comp 35 |
|---|---|---|---|---|
| PA6 Domamid® 27 | 80 | 80 | 80 | 80 |
| Lotader®4700 | 20 | 18 | 18 | 18 |
| coPA6/6.6/12diNH$_2$ |  | 2 |  |  |
| PA6diNH$_2$ |  |  | 2 |  |
| PA12diCOOH |  |  |  | 2 |
| Choc à +23°C | 59 | 85 | 58 | 42 |
| Choc à -40°C | 12.2 | 18.2 | 13.7 | 11 |

Le tableau 4 illustre l'efficacité du PA12diNH$_2$ en terme de tenue au vieillissement thermique. Les valeurs mesurées et regroupées dans le tableau 4 ont été obtenues en faisant agir des éprouvettes haltère placées dans un milieu avec une atmosphère à 140°C. On fait subir à ces éprouvettes un test de traction et on suit la valeur d'allongement à la rupture. On affecte l'indice à la valeur d'allongement-rupture à t=0 (éprouvette non vieillie). On définit la demi-vie comme étant la durée pour laquelle l'allongement-rupture n'est plus que la moitié de sa valeur initiale, reportée dans le tableau 4.

Les comparatifs 41, 42 et l'exemple 43 sont stabilisés par des stabilisants organiques classiques du commerce. « TL » est un mélange de Lowinox® 44B25 de Lowi, de Tinuvin® 312 de Ciba, d'Hostanox® TM PAR 24 de Hoechst en proportion en poids 2/3, 1/6, 1/6.

Les comparatifs 44, 45 et l'exemple 46 sont stabilisés par des stabilisants minéraux. « A6 » est un mélange de iodure de cuivre et de iodure de potassium en proportion en poids 1 pour 8.

On montre dans ce tableau, un avantage supplémentaire d'utiliser comme modifiant choc le PA12diNH$_2$ par rapport à l'EPRm en matière de tenue au vieillissement.

## TABLEAU 4

|  | comp 41 | comp 42 | Ex 43 | comp 44 | comp 45 | 46 |
|---|---|---|---|---|---|---|
| PA6 Akulon® C225 | 78.8 | 78.8 | 78.8 | 79.3 | 79.3 | 79.3 |
| Lotader®4700 |  | 20 | 18 |  | 20 | 18 |
| EPRm VA1801 | 20 |  |  | 20 |  |  |
| PA12 diNH$_2$ |  |  | 2 |  |  | 2 |
| TL | 1.2 | 1.2 | 1.2 |  |  |  |
| A6 |  |  |  | 0.7 | 0.7 | 0.7 |
| Choc à +23°C |  | 30 | 86 | 73 | 29 | 86 |
| Choc à -40°C |  | 10.3 | 19 | 13.4 | 9.7 | 19.4 |
| Tenue au vieillisse-ment | < 24 | 175 | 250 | < 24 | 200 | 400 |

Le **TABLEAU 5** met en évidence les avantages de la composition selon l'invention . Ces compositions donnent de bons résultats choc de +23°C à -40°C avec de faible pourcentage de PadiNH2 mais également avec très peu de modifiant réactif.

En effet, les exemples 56 et 58 montrent qu'avec seulement 2 % de modifiant réactif comprenant des macromolécules comprenant au moins deux fonctions réactives par chaîne, on a de bons résultats chocs.

Au contraire, le comp.62 montre qu'avec 18 % de modifiant choc réactif comprenant des macromolécules comprenant moins de deux fonctions réactives par chaîne, on a des résultats chocs nettement moins bons.

TABLEAU 5

| Ex : | 51 comp | 52 | 53 | 54 | 55 comp | 56 | 57 comp | 58 | 59 comp | 60 | 61 comp | 62 comp | 63 | 64 | 65 |
|---|---|---|---|---|---|---|---|---|---|---|---|---|---|---|---|
| PA6 | 80 | 80 | 80 | 80 | 80 | 80 | 80 | 80 | 80 | 80 | 80 | 80 | 80 | 80 | 80 |
| Lotader® 4700 | 20 | 18 | 18 | 16 | | | | | | | | | 19,8 | 19,6 | 19 |
| PA12diNH$_2$ | | 2 | | 2 | | 2 | | 2 | | 2 | | 2 | 0,2 | 0,4 | 1 |
| Lotader® 3410 | | | | 2 | 2 | 2 | 2 | 2 | | | | | | | |
| Lotryl® 30BA02 | | | | | 18 | 16 | | | | | | | | | |
| Engage® 8842 | | | | | | | 18 | 16 | | | | | | | |
| coPA IPD.10/12diNH$_2$ | | | 2 | | | | | | | | | | | | |
| Lotader® 4720 | | | | | | | | | | | 20 | 18 | | | |
| Surlyn® 9020 | | | | | | | | | 20 | 18 | | | | | |
| MFI 235°C ; 2,16kg en g/10 min | 3,4 | 4,5 | 8,1 | 5,7 | | 9,6 | | | | | | | 6,1 | 6,8 | 7,7 |
| Choc à +23°C | 26 | 90 | 69 | 85 | 32 | 83 | 76 | 80 | 24 | 28 | 31 | 38 | 36 | 48 | 69 |
| Choc à -40°C | 8,0 | 17,4 | 15,7 | 16,2 | 11,5 | 14,3 | 9,9 | 13,9 | 10,7 | 14 | 10,6 | 12,7 | 9,8 | 12 | 15,4 |

EP 1 272 563 B1

**EP 1 272 563 B1**

**Revendications**

1. Composition thermoplastique à base de polyamide, **caractérisée en ce qu'**elle comprend en poids :

   - 50 à 98 parties d'un polyamide (A1) non diamine ;
   - 0,2 à 9 parties d'un polyamide (A2) diamine, la chaîne dudit polyamide (A2) étant différente de celle du polyamide (A1), ce polyamide (A2) diamine n'étant pas miscible avec le polyamide (A1) non diamine, et le rapport massique (A2)/(A1) étant inférieur à 1 ;
   - 1 à 30 parties, d'au moins un modifiant choc et réactif (B) ou d'un mélange (B') comprenant au moins un modifiant choc et au moins un modifiant réactif.

2. Composition selon la revendication 1, **caractérisée en ce que** le modifiant choc et réactif (B) ou le modifiant réactif du mélange (B') comprend au moins une macromolécule comprenant au moins deux fonctions réactives par macromolécule.

3. Composition selon l'une quelconque des revendications précédentes **caractérisée en ce que** la température de fusion du polyamide (A2) diamine ou, s'il est amorphe, sa température de transition vitreuse (Tg), est inférieure à la température de fusion du polyamide (A1) non diamine ou, s'il est amorphe, à sa température de transition vitreuse (Tg).

4. Composition selon l'une des revendications précédentes **caractérisée en ce que** la différence entre les températures de fusion de (A1) et (A2) ou entre la température de fusion de l'un et la Tg de l'autre ou entre les Tg de (A1) et (A2), selon le cas d'espèce, est comprise entre 15 et 50°C, les températures de fusion et les Tg étant mesurées par DSC (Differential Scanning Calorimetry).

5. Composition selon l'une quelconque des revendications précédentes, **caractérisée en ce que** la valeur de choc à +23°C et/ou à -40°C mesurée selon la norme CAE ISO 179 :93 de ladite composition comprenant x parties de (A1), y parties de (A2) et z parties de modifiant choc et réactif (B) ou de mélange de modifiants comprenant au moins un modifiant choc et réactif (B) ou de mélange (B') comprenant au moins un modifiant choc et au moins un modifiant réactif est supérieure d'au moins 25 %, préférentiellement d'au moins 50 %, à la valeur de choc respectivement à +23°C et/ou à -40°C d'une composition thermoplastique ne comprenant pas de polyamide (A2) diamine mais comprenant x parties du même composé polyamide (A1) non diamine et (z+y) parties du même composé modifiant choc et réactif (B) ou du même mélange de modifiants comprenant au moins un modifiant choc et réactif (B) ou du même mélange (B') comprenant au moins un modifiant choc et au moins un modifiant réactif.

6. Composition selon l'une quelconque des revendications précédentes, **caractérisée en ce que** le MFI de ladite composition thermoplastique comprenant x parties de (A1), y parties de (A2) et z parties de modifiant choc et réactif (B) ou de mélange de modifiants comprenant au moins un modifiant choc et réactif (B) ou de mélange (B') comprenant au moins un modifiant choc et au moins un modifiant réactif est inférieur au MFI d'une composition thermoplastique ne comprenant pas de polyamide (A2) diamine mais comprenant x parties du même composé polyamide (A1) non diamine et (z+y) parties du même composé modifiant choc et réactif (B) ou du même mélange de modifiants comprenant au moins un modifiant choc et réactif (B) ou du même mélange (B') comprenant au moins un modifiant choc et au moins un modifiant réactif.

7. Composition selon l'une quelconque des revendication précédentes, **caractérisée en ce que** le rapport massique (A2)/(B) est inférieur à 0,5.

8. Composition selon l'une quelconque des revendications précédentes, **caractérisée en ce que** le rapport des concentrations des fonctions $NH_2$ du polyamide (A2) diamine et des fonctions réactives du modifiant choc et réactif (B) ou du modifiant réactif du mélange (B') est inférieur à 0,5.

9. Composition selon l'une quelconque des revendications précédentes, **caractérisée en ce que** le polyamide (A2) diamine est un PA 12 diamine ou un polyamide comprenant des motifs lauryllactame et/ou des motifs dodécaméthylènediamine et/ou des motifs acide dodécanedioïque.

10. Composition selon l'une quelconque des revendications précédentes, **caractérisée en ce que** le modifiant choc et/ou réactif est souple et a un module de flexion de préférence inférieur à 200 MPa.

**11.** Composition selon l'une quelconque des revendications précédentes, **caractérisée en ce que** le modifiant choc et réactif (B) ou le modifiant réactif du mélange (B') est un copolymère (B1) à base d'éthylène et d'un anhydride d'acide carboxylique insaturé, copolymérisés.

**12.** Composition selon la revendication 11, **caractérisée en ce que** le copolymère (B1) est choisi parmi les copolymères éthylène/anhydride maléique et éthylène/ (méth)acrylate d'alkylelanhydride maléique, ces copolymères comprenant de 0,2 à 10 % en poids d'anhydride maléique, de 0 à 40 % en poids de (méth)acrylate d'alkyle et ayant un MFI, indice de fluidité à l'état fondu, compris entre 0,5 et 200 g/10 min (mesuré à 190°C sous une charge de 2,16 kg).

**13.** Composition selon rune quelconque des revendications 1 à 10, **caractérisée en ce que** le modifiant choc et réactif (B) ou le modifiant réactif du mélange (B') est un copolymère (B1) de l'éthylène et d'un anhydride d'acide carboxylique insaturé cogreffé.

**14.** Composition selon la revendication 13, **caractérisée en ce que** le copolymère (B1) est l'EPR (éthylène-propylène rubber) cogreffé par l'anhydride maléique, ledit copolymère (B1) représentant préférentiellement entre 12 et 30 parties en poids de ladite composition thermoplastique.

**15.** Composition selon la revendication 14, **caractérisée en ce qu'**elle comprend entre 0,2 et 6 parties en poids de polyamide (A2) diamine.

**16.** Composition selon l'une quelconque des revendications 1 à 10, **caractérisée en ce que** le modifiant choc et réactif (B) ou le modifiant réactif du mélange (B') est un copolymère (B2) à base d'éthylène et d'un époxyde insaturé cogreffé ou copolymérisé.

**17.** Composition selon la revendication 16, **caractérisée en ce que** (B2) est choisi parmi les copolymères éthylène/ (méth)acrylate d'alkyle/époxyde insaturé et les copolymères éthylène/époxyde insaturé, ces copolymères comprenant de 0 à 40 parties en poids de (méth)acrylate d'alkyle et de 0,1 à 10 parties en poids d'époxyde insaturé.

**18.** Composition selon l'une quelconque des revendications 1 à 10, **caractérisée en ce que**:

- (A1) est le PA 6 non diamine ou le PA 6-6 non diamine;
- (A2) est le PA 12 diamine ou le PA 11 diamine ;
- (B) est le copolymère (B1) selon l'une des revendications 11 à 14.

**19.** Composition selon l'une quelconque des revendications 1 à 10, **caractérisée en ce que**:

- (A1) est le PA 11 non diamine;
- (A2) est le PA 12 diamine ;
- (B) est le copolymère (B1) selon l'une des revendications 11 à 14.

**20.** Composition selon l'une quelconque des revendications 1 à 10, **caractérisée en ce que**:

- (A1) est le PA 12 non diamine;
- (A2) est le PA 11 diamine :
- (B) est le copolymère (B1) selon l'une des revendications 11 à 14.

**21.** Procédé de préparation d'une composition thermoplastique à base de polyamide selon l'une quelconque des revendications 1 à 20, **caractérisé en ce qu'**il comprend une étape de mélange d'un polyamide (A1) non diamine avec une composition de modifiant choc comprenant

- 0,2 à 5 parties, de préférence 1 à 3 parties d'un polyamide (A2) diamine;
- 5 à 40 parties, de préférence 10 à 30 parties d'au moins un modifiant choc et réactif (B) ou d'un mélange (B') comprenant au moins un modifiant choc et au moins un modifiant réactif;
- 0 à 20 parties d'un plastifiant.

**EP 1 272 563 B1**

**Claims**

1. Polyamide-based thermoplastic composition, **characterized in that** it comprises, by weight:

   - 50 to 98 parts of a polyamide (A1) nondiamine;
   - 0.2 to 9 parts, of a polyamide (A2) diamine, the chain of said polyamide (A2) being different from that of the polyamide (A1) this polyamide (A2) diamine being immiscible with the polyamide (A1) nondiamine, and the ratio by mass (A2)/(A1) being less than 1;
   - 1 to 30 parts, of at least one reactive impact modifier (B) or of a blend (B') comprising at least one impact modifier and at least one reactive modifier.

2. Composition according to Claim 1, **characterized in that** the reactive impact modifier (B) or the reactive modifier of the blend (B') comprises at least one macromolecule comprising at least two reactive functional groups per macromolecule.

3. Composition according to either of the preceding Claims, **characterized in that** the melting temperature of the polyamide (A2) diamine or, if it is amorphous, its glass transition temperature (Tg) is less than the melting temperature of the polyamide (A1) nondiamine or, if it is amorphous, than its glass transition temperature (Tg).

4. Composition according to one of the preceding Claims, **characterized in that** the difference between the melting temperatures of (A1) and (A2) or between the melting temperature of one and the Tg of the other or between the Tg values of (A1) and (A2), according to the individual case, is between 15 and 50°C, the melting temperatures and the Tg values being measured by DSC (Differential Scanning Calorimetry).

5. Composition according to any one of the preceding Claims, **characterized in that** the impact value at +23°C and/ or at -40°C, measured according to the ISO CAE standard 179 :93, of said composition comprising x parts of (A1 ), y parts of (A2) and z parts of reactive impact modifier (B) or of blend of modifiers comprising at least one reactive impact modifier (B) or of blend (B') comprising at least one impact modifier and at least one reactive modifier is greater by at least 25%, preferably by at least 50%, than the impact value at +23°C and/or at -40°C respectively of a thermoplastic composition not comprising polyamide (A2) diamine but comprising x parts of the same polyamide (A1) nondiamine compound and (z+y) parts of the same reactive impact modifier compound (B) or of the same blend of modifiers comprising at least one reactive impact modifier (B) or of the same blend (B') comprising at least one impact modifier and at least one reactive modifier.

6. Composition according to any one of the preceding Claims, **characterized in that** the MFI value of said thermoplastic composition comprising x parts of (A1), y parts of (A2) and z parts of reactive impact modifier (B) or of blend of modifiers comprising at least one reactive impact modifier (B) or of blend (B') comprising at least one impact modifier and at least one reactive modifier is less than the MFI value of a thermoplastic composition not comprising polyamide (A2) diamine but comprising x parts of the same polyamide (A1) nondiamine compound and (z+y) parts of the same reactive impact modifier compound (B) or of the same blend of modifiers comprising at least one reactive impact modifier (B) or of the same blend (B') comprising at least one impact modifier and at least one reactive modifier.

7. Composition according to any one of the preceding Claims, **characterized in that** the ratio by mass (A2)/(B) is less than 0.5.

8. Composition according to any one of the preceding Claims, **characterized in that** the ratio of the concentrations of the $NH_2$ functional groups of the polyamide (A2) diamine to the reactive functional groups of the reactive impact modifier (B) or of the reactive modifier of the blend (B') is less than 0.5.

9. Composition according to any one of the preceding Claims, **characterized in that** the polyamide (A2) diamine is a PA 12 diamine or a polyamide comprising lauryllactam units and/or dodecamethylenediamine units and/or dodecanedioic acid units.

10. Composition according to any one of the preceding Claims, **characterized in that** the reactive impact modifier is flexible and has a flexural modulus preferably of less than 200 MPa.

11. Composition according to any one of the preceding Claims, **characterized in that** the reactive impact modifier (B)

18

or the reactive modifier of the blend (B') is a copolymer (B1) based on ethylene and on an unsaturated carboxylic acid anhydride, which are copolymerized.

12. Composition according to Claim 11, **characterized in that** the copolymer (B1) is chosen from ethylene/maleic anhydride and ethylene/alkyl (meth)acrylate/maleic anhydride copolymers, these copolymers comprising from 0.2 to 10% by weight of maleic anhydride and from 0 to 40% by weight of alkyl (meth)acrylate and having an MFI, melt flow index, of between 0.5 and 200 g/10 min (measured at 190°C under a load of 2.16 kg).

13. Composition according to any one of Claims 1 to 10, **characterized in that** the reactive impact modifier (B) or the reactive modifier of the blend (B') is a copolymer (B1) of ethylene and of a cografted unsaturated carboxylic acid anhydride.

14. Composition according to Claim 13, **characterized in that** the copolymer (B1) is EPR (ethylene-propylene rubber) cografted with maleic anhydride, said copolymer (B1) preferably representing between 12 and 30 parts by weight of said thermoplastic composition.

15. Composition according to Claim 14, **characterized in that** it comprises between 0.2 and 6 parts by weight of polyamide (A2) diamine.

16. Composition according to any one of Claims 1 to 10, **characterized in that** the reactive impact modifier (B) or the reactive modifier of the blend (B') is a copolymer (B2) based on ethylene and on a cografted or copolymerized unsaturated epoxide.

17. Composition according to Claim 16, **characterized in that** (B2) is chosen from ethylene/alkyl (meth)acrylate/unsaturated epoxide copolymers and ethylene/unsaturated epoxide copolymers, these copolymers comprising from 0 to 40 parts by weight of alkyl (meth)acrylate and from 0.1 to 10 parts by weight of unsaturated epoxide.

18. Composition according to any one of Claims 1 to 10, **characterized in that**:

    - (A1) is PA 6 nondiamine or PA 6-6 nondiamine;
    - (A2) is PA 12 diamine or PA 11 diamine;
    - (B) is the copolymer (B1) according to one of claims 11 to 14.

19. Composition according to any one of Claims 1 to 10, **characterized in that**:

    - (A1) is PA 11 nondiamine;
    - (A2) is PA 12 diamine;
    - (B) is the copolymer (B1) according to one of claims 11 to 14.

20. Composition according to any one of Claims 1 to 10, **characterized in that**:

    - (A1) is PA 12 nondiamine;
    - (A2) is PA 11 diamine;
    - (B) is the copolymer (B1) according to one of claims 11 to 14.

21. Process for the preparation of a polyamide-based thermoplastic composition according to any one of Claims 1 to 20, **characterized in that** it comprises a stage of blending a polyamide (A1) nondiamine with an impact modifier composition comprising

    - 0.2 to 5 parts, preferably 1 to 3 parts, of a polyamide (A2) diamine;
    - 5 to 40 parts, preferably 10 to 30 parts, of at least one reactive impact modifier (B) or of a blend (B') comprising at least one impact modifier and at least one reactive modifier;
    - 0 to 20 parts of a plasticizer.

**Patentansprüche**

1. Thermoplastische Zusammensetzung auf Polyamidbasis, **dadurch gekennzeichnet, daß** sie:

- 50 bis 98 Gewichtsteile eines keine zwei Aminendgruppen aufweisenden Polyamids (A1);
- 0,2 bis 9 Gewichtsteile eines zwei Aminendgruppen aufweisenden Polyamids (A2), wobei sich die Kette des Polyamids (A2) von derjenigen des Polyamids (A1) unterscheidet, das zwei Aminendgruppen aufweisende Polyamid (A2) nicht mit dem keine zwei Aminendgruppen aufweisenden Polyamid (A1) mischbar ist und das Massenverhältnis (A2)/(A1) kleiner 1 ist; und
- 1 bis 30 Gewichtsteile mindestens eines reaktiven Schlagzähmodifizierungsmittels (B) oder einer mindestens ein Schlagzähmodifizierungsmittel und mindestens ein reaktives Modifizierungsmittel enthaltenden Mischung (B')

enthält.

2. Zusammensetzung nach Anspruch 1, **dadurch gekennzeichnet, daß** das reaktive Schlagzähmodifizierungsmittel (B) oder das reaktive Modifizierungsmittel der Mischung (B') mindestens ein Makromolekül mit mindestens zwei reaktiven Funktionen pro Makromolekül umfaßt.

3. Zusammensetzung nach einem der vorhergehenden Ansprüche, **dadurch gekennzeichnet, daß** die Schmelztemperatur des zwei Aminendgruppen aufweisenden Polyamids (A2) bzw. für den Fall, daß es amorph ist, seine Glasübergangstemperatur (Tg) kleiner ist als die Schmelztemperatur des keine zwei Aminendgruppen aufweisenden Polyamids (A1) bzw. für den Fall, daß es amorph ist, als dessen Glasübergangstemperatur (Tg).

4. Zusammensetzung nach einem der vorhergehenden Ansprüche, **dadurch gekennzeichnet, daß** die Differenz zwischen den Schmelztemperaturen von (A1) und (A2) bzw. zwischen der Schmelztemperatur des einen Polyamids und der Tg des anderen bzw. zwischen den Tg-Werten von (A1) und (A2) zwischen 15 und 50°C liegt, wobei die Schmelztemperaturen und Tg-Werte mittels DSC (Differentialkalorimetrie) bestimmt werden.

5. Zusammensetzung nach einem der vorhergehenden Ansprüche, **dadurch gekennzeichnet, daß** der gemäß ISO-CAE-Norm 179:93 bestimmte Schlagzähigkeitswert der x Teile (A1), y Teile (A2) und z Teile reaktives Schlagzähmodifizierungsmittel (B) bzw. mindestens ein reaktives Schlagzähmodifizierungsmittel (B) enthaltende Modifizierungsmittelmischung bzw. mindestens ein Schlagzähmodifizierungsmittel und mindestens ein reaktives Modifizierungsmittel enthaltende Mischung (B') enthaltenden Zusammensetzung bei +23°C und/oder bei -40°C um mindestens 25% und vorzugsweise mindestens 50% über dem jeweiligen Schlagzähigkeitswert einer thermoplastischen Zusammensetzung, die kein zwei Aminendgruppen aufweisendes Polyamid (A2), aber x Teile der gleichen keine zwei Aminendgruppen aufweisenden Polyamidverbindung (A1) und (y+z) Teile der gleichen reaktiven Schlagzähmodifizierungsmittelverbindung (B) bzw. der gleichen mindestens ein reaktives Schlagzähmodifizierungsmittel (B) enthaltenden Modifizierungsmittelmischung bzw. der gleichen mindestens ein Schlagzähmodifizierungsmittel und mindestens ein reaktives Modifizierungsmittel enthaltenden Mischung (B') enthält, bei +23°C und/oder bei -40°C liegt.

6. Zusammensetzung nach einem der vorhergehenden Ansprüche, **dadurch gekennzeichnet, daß** der MFI-Wert der x Teile (A1), y Teile (A2) und z Teile reaktives Schlagzähmodifizierungsmittel (B) bzw. mindestens ein reaktives Schlagzähmodifizierungsmittel (B) enthaltende Modifizierungsmittelmischung bzw. mindestens ein Schlagzähmodifizierungsmittel und mindestens ein reaktives Modifizierungsmittel enthaltende Mischung (B') enthaltenden thermoplastischen Zusammensetzung unter dem MFI-Wert einer thermoplastischen Zusammensetzung, die kein zwei Aminendgruppen aufweisendes Polyamid (A2), aber x Teile der gleichen keine zwei Aminendgruppen aufweisenden Polyamidverbindung (A1) und (y+z) Teile der gleichen Schlagzähmodifizierungsmittelverbindung (B) bzw. der gleichen mindestens ein reaktives Schlagzähmodifizierungsmittel (B) enthaltenden Modifizierungsmittelmischung bzw. der gleichen mindestens ein Schlagzähmodifizierungsmittel und mindestens ein reaktives Modifizierungsmittel enthaltenden Mischung (B') enthält, liegt.

7. Zusammensetzung nach einem der vorhergehenden Ansprüche, **dadurch gekennzeichnet, daß** das Massenverhältnis (A2)/(B) unter 0,5 liegt.

8. Zusammensetzung nach einem der vorhergehenden Ansprüche, **dadurch gekennzeichnet, daß** das Verhältnis der Konzentrationen der $NH_2$-Funktionen des zwei Aminendgruppen aufweisenden Polyamids (A2) und den reaktiven Funktionen des reaktiven Schlagzähmodifizierungsmittels (B) bzw. des reaktiven Modifzierungsmittels der Mischung (B') unter 0,5 liegt.

9. Zusammensetzung nach einem der vorhergehenden Ansprüche, **dadurch gekennzeichnet, daß** es sich bei dem zwei Aminendgruppen aufweisenden Polyamid (A2) um ein zwei Aminendgruppen aufweisendes PA-12 oder ein Polyamid mit Lauryllactam-Einheiten und/oder Dodecamethylendiamin-Einheiten und/oder Dodecandisäure-Einheiten handelt.

10. Zusammensetzung nach einem der vorhergehenden Ansprüche, **dadurch gekennzeichnet, daß** das gegebenenfalls reaktive Schlagzähmodifizierungsmittel flexibel ist und einen Biegemodul von vorzugsweise weniger als 200 MPa aufweist.

11. Zusammensetzung nach einem der vorhergehenden Ansprüche, **dadurch gekennzeichnet, daß** es sich bei dem reaktiven Schlagzähmodifizierungsmittel (B) oder dem reaktiven Modifizierungsmittel der Mischung (B') um ein Copolymer (B1) auf Basis von Ethylen und einem damit copolymerisierten ungesättigten Carbonsäureanhydrid handelt.

12. Zusammensetzung nach Anspruch 11, **dadurch gekennzeichnet, daß** das Copolymer (B1) unter Ethylen/Maleinsäureanhydrid- und Ethylen/Alkyl(meth)acrylat/Maleinsäureanhydrid-Copolymeren mit 0,2 bis 10 Gew.-% Maleinsäureanhydrid und 0 bis 40 Gew.-% Alkyl(meth)acrylat und einem Schmelzflußindex MFI zwischen 0,5 und 200 g/10 min (gemessen bei 190°C unter einem Auflagegewicht von 2,16 kg) ausgewählt ist.

13. Zusammensetzung nach einem der Ansprüche 1 bis 10, **dadurch gekennzeichnet, daß** es sich bei dem reaktiven Schlagzähmodifizierungsmittel (B) oder dem reaktiven Modifizierungsmittel der Mischung (B') um ein Copolymer (B1) von Ethylen und einem cogepfropften ungesättigten Carbonsäureanhydrid handelt.

14. Zusammensetzung nach Anspruch 13, **dadurch gekennzeichnet, daß** es sich bei dem Copolymer (B1) um mit Maleinsäureanhydrid cogepfropftes EPR (Ethylen-Propylen-Kautschuk) handelt, wobei das Copolymer (B1) vorzugsweise zwischen 12 und 30 Gewichtsteile der thermoplastischen Zusammensetzung ausmacht.

15. Zusammensetzung nach Anspruch 14, **dadurch gekennzeichnet, daß** sie zwischen 0,2 und 6 Gewichtsteile zwei Aminendgruppen aufweisendes Polyamid (A2) enthält.

16. Zusammensetzung nach einem der Ansprüche 1 bis 10, **dadurch gekennzeichnet, daß** es sich bei dem reaktiven Schlagzähmodifizierungsmittel (B) oder dem reaktiven Modifizierungsmittel der Mischung (B') um ein Copolymer (B2) auf Basis von Ethylen und einem cogepfropften oder copolymerisierten ungesättigten Epoxid handelt.

17. Zusammensetzung nach Anspruch 16, **dadurch gekennzeichnet, daß** (B2) unter Copolymeren von Ethylen, Alkyl(meth)acrylat und ungesättigtem Epoxid und Copolymeren von Ethylen und ungesättigtem Epoxid mit 0 bis 40 Gewichtsteilen Alkyl(meth)acrylat und 0,1 bis 10 Gewichtsteilen ungesättigtem Epoxid ausgewählt ist.

18. Zusammensetzung nach einem der Ansprüche 1 bis 10, **dadurch gekennzeichnet, daß**:

   - es sich bei (A1) um keine zwei Aminendgruppen aufweisendes PA-6 oder keine zwei Aminendgruppen aufweisendes PA-6,6 handelt;
   - es sich bei (A2) um zwei Aminendgruppen aufweisendes PA-12 oder zwei Aminendgruppen aufweisendes PA-11 handelt und
   - es sich bei (B) um das Copolymer (B1) nach einem der Ansprüche 11 bis 14 handelt.

19. Zusammensetzung nach einem der Ansprüche 1 bis 10, **dadurch gekennzeichnet, daß**:

   - es sich bei (A1) um keine zwei Aminendgruppen aufweisendes PA-11 handelt;
   - es sich bei (A2) um zwei Aminendgruppen aufweisendes PA-12 handelt und
   - es sich bei (B) um das Copolymer (B1) nach einem der Ansprüche 11 bis 14 handelt.

20. Zusammensetzung nach einem der Ansprüche 1 bis 10, **dadurch gekennzeichnet, daß**:

   - es sich bei (A1) um keine zwei Aminendgruppen aufweisendes PA-12 handelt;
   - es sich bei (A2) um zwei Aminendgruppen aufweisendes PA-11 handelt und
   - es sich bei (B) um das Copolymer (B1) nach einem der Ansprüche 11 bis 14 handelt.

21. Verfahren zur Herstellung einer thermoplastischen Zusammensetzung auf Polyamidbasis nach einem der Ansprüche 1 bis 20, **dadurch gekennzeichnet, daß** man ein keine zwei Aminendgruppen aufweisendes Polyamid (A1) mit einer Schlagzähmodifizierungsmittelzusammensetzung, die

- 0,2 bis 5 Teile und vorzugsweise 1 bis 3 Teile eines zwei Aminendgruppen aufweisenden Polyamids (A2),
- 5 bis 40 Teile und vorzugsweise 10 bis 30 Teile mindestens eines reaktiven Schlagzähmodifizierungsmittels (B) oder einer mindestens ein Schlagzähmodifizierungsmittel und mindestens ein reaktives Modifizierungsmittel enthaltenden Mischung (B') und
- 0 bis 20 Teile eines Weichmachers

enthält, vermischt.

## FIGURE 1

## FIGURE 2

500 nm

## FIGURE 3